(19) Europäisches Patentamt
European Patent Office
Office européen des brevets

(11) **EP 2 141 518 A1**

(12) **EUROPEAN PATENT APPLICATION**
published in accordance with Art. 153(4) EPC

(43) Date of publication:
**06.01.2010 Bulletin 2010/01**

(21) Application number: **08751835.3**

(22) Date of filing: **11.04.2008**

(51) Int Cl.:
*G02B 5/08* (2006.01)    *B32B 5/18* (2006.01)
*C08J 9/12* (2006.01)    *C08K 3/00* (2006.01)
*C08L 23/00* (2006.01)    *F21V 7/00* (2006.01)
*F21V 7/22* (2006.01)

(86) International application number:
**PCT/JP2008/057209**

(87) International publication number:
**WO 2008/136255 (13.11.2008 Gazette 2008/46)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.04.2007 JP 2007116582**

(71) Applicant: **Nitto Denko Corporation Ibaraki-shi, Osaka 567-8680 (JP)**

(72) Inventor: **The designation of the inventor has not yet been filed**

(74) Representative: **Grünecker, Kinkeldey, Stockmair & Schwanhäusser Anwaltssozietät Leopoldstrasse 4 80802 München (DE)**

(54) **LIGHT-REFLECTING MEMBER CONTAINING POLYOLEFIN RESIN FOAM, AND METHOD FOR PRODUCING THE SAME**

(57) The present invention relates to a light-reflecting member including a polyolefin resin foam as a light-reflecting layer, the polyolefin resin foam being obtained by foam molding a resin composition containing a polyolefin resin. According to the light-reflecting member of the invention, since it has the above-mentioned constitution, the light-reflecting member is excellent in light reflection, impact-absorbing property, and lightness in weight Moreover, the process for producing a light-reflecting member of the invention can provide a light-reflecting member excellent in light reflection, impact-absorbing property, and lightness in weight by using a polyolefin resin foam.

**Description**

TECHNICAL FIELD

The present invention relates to a light-reflecting member using a polyolefin resin foam. More specifically, it relates to a light-reflecting member using a polyolefin resin foam which has a high light reflectance, is lightweight and excellent in impact-absorbing property, and is further suitable for applications of light-reflecting member for backlight of liquid crystal displays and light-reflecting member for electric spectacular bulletin boards.

BACKGROUND ART

Since a liquid crystal display does not emit light for itself, it requires another backlight unit. The above backlight unit is a part which plays an important role for brightness and appearance of its screen. In particular, it plays an important role for increase or decrease in luminance. Moreover, since a light-reflecting member capable of reflecting light is disposed in the vicinity of a lump in the backlight unit of the liquid crystal display, the member plays a considerably important role.

As such light-reflecting members, there are known, for example, (i) a light-reflecting member of a three-layer structure constituted by an intermediate layer composed of a polyester film containing microcells formed by mixing a foaming chemical and top layers containing calcium carbonate; (ii) a light-reflecting member of a three-layer structure constituted by an intermediate layer composed of a foam and top layers containing barium sulfate and increasing reflection efficiency; (iii) a light-reflecting member formed by batch foaming with an inactive gas and containing microcells whose expansion ratio is two times or more; and the like.

However, the above reflecting members (light-reflecting members) all have defects that the expansion ratio is very small and impact-absorbing performance is low.

On the other hand, an elastomer foam has an excellent cushioning property and is usefully employed as a sealing material, a cushioning material, a padding material, or the like. For example, the foam has been used as a dust proofing material, a shock-absorbing material, and the like of liquid crystal displays, plasma displays, and organic EL displays of electric or electronic devices such as mobile phones and digital cameras (see Patent Document 1).

Patent Document 1: JP-A-2005-68203

DISCLOSURE OF THE INVENTION

Accordingly, an object of the invention is to provide a light-reflecting member excellent in light reflection, impact-absorbing property, and lightness in weight; and a process for producing the same.

As a result of the intensive studies for solving the above problems, the present inventors have found that a light-reflecting member excellent in light reflection, impact-absorbing property, and lightness in weight can be obtained by containing a polyolefin resin foam, which is obtained by foam molding a resin composition containing a polyolefin resin, as a light-reflecting layer. Thus, they have accomplished the invention.

Namely, the present invention provides a light-reflecting member including a polyolefin resin foam as a light-reflecting layer, the polyolefin resin foam being obtained by foam molding a resin composition containing a polyolefin resin.

The resin composition preferably further contains powder particles, and the resin composition preferably contains the powder particles in an amount of 5 to 150 parts by weight based on 104 parts by weight of the polyolefin resin.

The powder particles preferably have an average particle diameter of 0.1 to 10 $\mu$m.

The polyolefin resin foam preferably has an expansion ratio of 5 times or more.

Additionally, the light-reflecting member preferably has 80% or more of an average reflectance of light in the wavelength region of 300 to 700 nm.

The light-reflecting member preferably has a density of 0.02 to 0.3 g/cm$^3$.

The light-reflecting member is preferably a single layer composed of only a foamed layer including the polyolefin resin foam or a laminate composed of the foamed layer and a non-foamed layer provided on at least one surface of the foamed layer.

Furthermore, the present invention provides a process for producing a light-reflecting member, the process including forming a polyolefin resin foam as a light-reflecting layer by foam molding a resin composition containing a polyolefin resin.

In the process for producing a light-reflecting member, the resin composition containing a polyolefin resin is preferably foamed using a high-pressure gas.

The high-pressure gas is preferably carbon dioxide or nitrogen, and as the high-pressure gas, a fluid in a supercritical state is preferably used.

According to the light-reflecting member of the invention, since it has the above-mentioned constitution, the light-reflecting member is excellent in light reflection, impact-absorbing property, and lightness in weight. Moreover, the process for producing a light-reflecting member of the invention can provide a light-reflecting member excellent in light reflection, impact-absorbing property, and lightness in weight by using a polyolefin resin foam.

BEST MODE FOR CARRYING OUT THE INVENTION

The light-reflecting member of the invention includes a polyolefin resin foam as a light-reflecting layer, which is obtained by foam molding a resin composition containing a polyolefin resin. Namely, the light-reflecting layer in the light-reflecting member is a foamed layer composed of a polyolefin resin foam, which constitutes all or part of the layers of the light-reflecting member.

Resin Composition

The resin composition (composition for the polyolefin resin foam) contains at least a polyolefin resin which is a material of the polyolefin resin foam (foamed body) contained as a light-reflecting layer in the light-reflecting member of the invention and is a composition to be a raw material of the polyolefin resin foam. The resin composition contains at least a polyolefin resin and can be obtained by mixing it with powder particles, additives, and the like according to the necessity. Incidentally, a non-foamed resin molded product can be obtained by molding the resin composition.

The polyolefin resin contained in the resin composition as a polymer component is not particularly limited and examples thereof include low-density polyethylene, medium-density polyethylene, high-density polyethylene, linear low-density polyethylene, polypropylene, a copolymer of ethylene and propylene, a copolymer of ethylene or propylene and other $\alpha$-olefin (e.g., butene-1, pentene-1, hexene-1, 4-methylpentene-1, etc.), a copolymer of ethylene and other ethylenically unsaturated monomer(s) (e.g., vinyl acetate, acrylic acid, an acrylic ester, methacrylic acid, a methacrylic ester, vinyl alcohol, etc.), and the like. Moreover, the polyolefin resin can be used alone or in combination thereof. Incidentally, in the case where the polyolefin resin is a copolymer, it may be any form of copolymer, such as a random copolymer or a block copolymer.

As the polyolefin resin, it is preferred to use a resin of a type having a wide molecular weight distribution and having a shoulder at the high-molecular-weight side, a resin of slightly crosslinked type (a resin of a type a little crosslinked), a resin of a long-chain branched type, or the like.

In the invention, a rubber component and/or a thermoplastic elastomer component may be used in the resin composition together with the polyolefin resin. The ratio of the rubber component and/or thermoplastic elastomer component is not particularly limited. With regard to the mixing ratio (% by weight) of a mixture of the polyolefin resin with the rubber component and/or thermoplastic elastomer component, for example, the former/the latter is 1/99 to 99/1, preferably 10/90 to 90/10, and further preferably 20/80 to 80/20. In the mixture of the polyolefin resin with the rubber component and/or thermoplastic elastomer component, when the ratio of the rubber component and/or thermoplastic elastomer component is less than 1% by weight, the cushioning property of the polyolefin resin foam tends to decrease. On the other hand, when the ratio exceeds 99% by weight, outgassing tends to occur during foaming and thus it becomes difficult to obtain a highly foamed foam.

The rubber component and/or thermoplastic elastomer component is not particularly limited as long as it has rubber elasticity and is capable of foaming. Examples thereof include natural or synthetic rubbers such as natural rubber, polyisobutylene, polyisoprene, chloroprene rubber, butyl rubber and nitrile butyl rubber; olefin elastomers such as an ethylene-propylene copolymer, an ethylene-propylene-diene copolymer, an ethylene-vinyl acetate copolymer, polybutene and chlorinated polyethylene; styrenic elastomers such as a styrene-butadiene-styrene copolymer, a styrene-isoprene-styrene copolymer and hydrogenated polymers thereof; various thermoplastic elastomers, e.g., polyester-based elastomers; polyamide-based elastomers; polyurethane-based elastomers; and the like. These rubber components or thermoplastic elastomer components can be used alone or in combination thereof. Since these rubber components or thermoplastic elastomer components have a glass transition temperature of room temperature or lower (e.g., 20°C or lower), flexibility and a shape-following property can be remarkably improved when a polyolefin resin foam having a rubber component or thermoplastic elastomer component is used for the light-reflecting member.

As the rubber component and/or thermoplastic elastomer component, an olefin elastomer can be suitably used. In this connection, the olefin elastomer usually has a structure that the olefin resin component and the ethylene-propylene rubber are microphase-separated and thus, it has a good compatibility with the polyolefin resin.

In the invention, the polyolefin resin foam for use in the formation of the light-reflecting member preferably further contains powder particles. Namely, it is preferable that the polyolefin resin composition for use in foam molding of the polyolefin resin foam contains a polyolefin resin and powder particles. The powder particles can function as a foaming nucleant agent during foam molding. Therefore, a polyolefin resin foam in a good foamed state can be obtained by blending the powder particles. Incidentally, when powder particles are used in the resin composition and a fluid in a supercritical state is used as a high-pressure gas which is a foaming agent for use in foaming the polyolefin resin, a polyolefin resin foam particularly having fine uniform cells can be obtained.

As such powder particles, talc, silica, alumina, zeolite, calcium carbonate, magnesium carbonate, barium sulfate, zinc oxide, titanium oxide, aluminum hydroxide, magnesium hydroxide, mica, clays such as montmorillonite, carbon particles, glass fiber, carbon nanotube, and the like can be used. The powder particles can be used alone or in combination of thereof

The mixing amount of the powder particles is not particularly limited but, for example, can be suitably selected from the range of 5 to 150 parts by weight, preferably 10 to 130 parts by weight, and more preferably 20 to 120 parts by weight based on 100 parts by weight of the polyolefin resin (polymer component). When the mixing amount of the powder particles is less than 5 parts by weight based on 100 parts by weight of the polyolefin resin (polymer component), it becomes difficult to obtain a homogeneous foam. On the other hand, when the amount exceeds 150 parts by weight, viscosity as a resin composition remarkably increases and also outgassing occurs during foaming, so that there is a concern that foaming properties may be impaired.

The average particle diameter of the powder particles is not particularly limited but is, for example, about 0.1 to 10 $\mu$m, preferably 0.5 to 5$\mu$m. When the average particle diameter of the powder particles is less than 0.1 $\mu$m, the function as a nucleant agent becomes insufficient in some cases. When the average particle diameter exceeds 10 $\mu$m, it causes outgassing during foam molding in some cases.

Moreover, since the polyolefin resin foam is constituted by the polyolefin resin, the foam has a property of easily flammable (needless to say, the property is also a drawback). Therefore, in the case where the light-reflecting member using the polyolefin resin foam is employed in applications in which it is indispensable to impart flame retardancy, such as electric/electronic device applications (e.g., applications as a light-reflecting member for backlight of liquid crystal displays and as a light-reflecting member for electric spectacular bulletin boards), it is preferable to incorporate powder particles having flame retardancy (e.g., various powdery flame retardants). In this connection, the flame retardant can be used together with powder particles other than a flame retardant.

As such a flame retardant, an inorganic flame retardant is suitable. As the inorganic flame retardant, for example, a bromine-based flame retardant, a chlorine-based flame retardant, a phosphorus-based flame retardant, an antimony-based flame retardant may be used. However, the chlorine-based and bromine-based flame retardant have a problem of generating gases poisonous to human and corrosive to instruments at the time of burning. Further, the phosphorus-based flame retardant and antimony-based flame retardant have a problem of harmful effect or explosiveness. Accordingly, a non-halogen-non-antimony-based inorganic flame retardant is suitably used. As the non-halogen-non-antimony-based inorganic flame retardant, there may be mentioned hydrated metal compounds such as aluminum hydroxide, magnesium hydroxide, a hydrate of magnesium oxide-nickel oxide, and a hydrate of magnesium oxide-zinc oxide. Incidentally, the above-mentioned hydrated metal oxides may be surface treated. The flame retardants can be used alone or in combination thereof.

In the case of using the flame retardant, the amount of the flame retardant to be used is not particularly limited but, for example, can be suitably selected from the range of 10 to 70% by weight, preferably 25 to 65 by weight based on the total amount of the resin composition. When the amount of the flame retardant is excessively small, the flame-retarding effect is reduced. On the other hand, when the amount is excessively large, it becomes difficult to obtain a highly foamed foam.

The polyolefin resin foam for use in the light-reflecting member of the invention may contain various additives according to the necessity. The kind of the additives is not particularly limited and various additives usually employed at foaming molding can be used. Specifically, examples of the additives include a cell nucleant agent, a crystal nucleant agent, a plasticizer, a lubricant, a colorant (pigment, dye, or the like), a UV absorber, an antioxidant, an aging inhibitor, a filler, a reinforcing agent, an antistatic agent, a surfactant, a tension modifier, a shrink inhibitor, a flowability modifier, clay, a vulcanizing agent, a surface treating agent, various forms of flame retardants having other than powdery form, a dispersion aid, a resin modifier for polyolefin, and the like. The amount of the additives to be added can be suitably selected from the range where formation of the cells and the like are not impaired and an amount to be used at molding of usual thermoplastic resins can be adopted.

Polyolefin Resin Foam

The polyolefin resin foam is a foam to be used as a light-reflecting layer of the light-reflecting member of the invention and a foam constituting all part of the light-reflecting member having a single-layered structure or part of the layers of the light-reflecting member having a laminated structure as a foamed layer (foamed portion, foamed part). The polyolefin resin foam can be formed by foam molding the above-mentioned resin composition using the resin composition as a raw material.

The process for producing the polyolefin resin foam is not particularly limited but a method of foaming the resin composition containing the polyolefin resin using a high-pressure gas (a forming method of impregnation with a high-pressure gas as a foaming agent and subsequent reduction of pressure (release of pressure)) is preferably used as a foaming method. In a physical foaming method (a foaming method by a physical method), there is a fear of flammability and toxicity of a substance to be used as a foaming agent and its influence on the environment such as ozone depletion. However, the foaming method using the high-pressure gas is an enviromnent-friendly method in view of no use of such a foaming agent. Moreover, in a chemical foaming method (a foaming method by a chemical method), since residue of a foaming gas remains in the foam, contamination with a corrosive gas or an impurity in the gas may cause a problem in some cases but a clean foam without such an impurity or the like can be obtained in the foaming method using the high-pressure gas. Furthermore, in the physical forming method and chemical foaming method, it is difficult to form a fine cell structure and it is said that the formation of fine cells having a diameter of 300 $\mu$m or less is extremely difficult.

The high-pressure gas is not particularly limited as long as it is inert to the polyolefin resin and is capable of impregnation. Examples thereof include air, inert gases (e.g., carbon dioxide (carbonic acid gas), nitrogen, helium, etc.), and the like. These gases may be used as a mixture. Of these, from the viewpoints of large impregnation amount and rapid impregnation rate, inert gases can be suitably used. Of the inert gases, carbon dioxide and nitrogen are particularly suitably used.

Further, from the viewpoint of acceleration of the impregnation rate, the above high-pressure gas (particularly carbon dioxide) is preferably a fluid in a supercritical state. In the supercritical state, the solubility in the polyolefin resin increases and it is possible to mix the gas at a high concentration. Also, upon a rapid pressure drop after impregnation, the occurrence of cell nuclei increases because the impregnation in a high concentration is possible as mentioned above, and the density of cells formed as a result of growth of the cell nuclei increases even at the same porosity, so that fine cells can be obtained. Incidentally, the critical temperature of carbon dioxide is 31°C, and the critical pressure thereof is 7.4 MPa.

At the production of the polyolefin resin foam, there may be applied a batch system in which the resin composition is previously molded into a suitable shape such as a sheet shape to form an unframed resin molded product (unfoamed molded article) and then the unfoamed resin molded product is impregnated with the high-pressure gas and is foamed by releasing the pressure or may be applied a continuous system in which the resin composition is kneaded together with the high-pressure gas under pressure to perform molding and at the same time the pressure is released to perform molding and foaming simultaneously. Thus, the unfoamed resin molded product previously molded may be impregnated with the inert gas or, after the melted resin composition is impregnated with the inert gas under pressure, it may be subjected to molding at the time when the pressure is reduced.

Specifically, at the production of the polyolefin resin foam by the batch system, as a method for producing the unfoamed resin molded product, there may be mentioned a method of molding the resin composition containing the polyolefin resin by using an extruder such as a single-screw extruder or a twin-screw extruder, a method of homogeneously kneading the resin composition by using a kneader provided with blades, such as a roller, cum, kneader or Banbury type kneader, and pressing it to a predetermined thickness using a hot-plate press or the like, a method of molding by using an injection molding machine, and the like method. The composition may be molded by a suitable method capable of affording a molded product having a desired shape and thickness. Cells are formed in the polyolefin resin through a gas impregnation step where the unfoamed resin foam thus obtained is placed in a pressure-resistant vessel (high-pressure vessel), and the high-pressure gas (such as carbon dioxide) is injected (introduced) thereinto to impregnate carbon dioxide into the unfoamed resin molded product, a pressure reduction step where, at a time when carbon dioxide is sufficiently impregnated thereinto, pressure is released (usually up to atmospheric pressure) to generate cell nuclei in the polyolefin resin, and optionally (according to the necessity) a heating step where the cell nuclei are allowed to grow by heating. In this connection, the cell nuclei may be allowed to grow at room temperature without performing the heating step. After the cells are allowed to grow as above, they are, if necessary, rapidly cooled with cold water or the like to fix their shape, thereby being able to obtain the polyolefin resin foam. The introduction of the high-pressure gas may be performed continuously or discontinuously. Further, as heating methods at allowing the cell nuclei to grow, there can be employed known or commonly used methods such as a water bath, an oil bath, a hot roll, a hot-air oven, far-infrared irradiation, near-infrared irradiation and microwave irradiation. Furthermore, the unformed molded resin product (unfoamed molded article) is not limited to the sheet-shaped product, and products having various shapes can be used depending on their application. Moreover, the unfoamed molded resin product can also be prepared by, in addition to extrusion molding, press molding, and injection molding, other molding methods.

On the other hand, in the case of producing the polyolefin resin foam by the continuous system, it can be produced through a kneading and impregnation step where, with kneading the resin composition containing the polyolefin resin by using an extruder such as a single-screw extruder or a twin-screw extruder, the high-pressure gas (such as carbon dioxide) is injected (introduced) thereinto to impregnate the inert gas sufficiently into the polyolefin resin and through a molding and pressure reduction step where the resin composition is extruded through dies provided on the front end of the extruder and thereby pressure is released (usually up to atmospheric pressure)to perform molding and foaming simultaneously. In some cases (according to the necessity), a heating step where the cell nuclei are allowed to grow by heating may be provided. After the cells are thus allowed to grow, they are rapidly cooled with cold water or the like to fix their shape, thereby being able to obtain the polyolefin resin foam. Incidentally, in the above kneading and impregnation step and molding and pressure reduction step, the operations can be performed by using, in addition to an extruder, an injection molding machine or the like. Moreover, a method capable of obtaining the polyolefin resin foam having a sheet, prism, or any other shape may be suitably selected.

The mixing amount of the high-pressure gas is not particularly limited but is, for example, about 2 to about 10% by weight based on the total amount of the polyolefin resin component in the resin composition. The gas may be mixed with suitable control so that desired density and expansion ratio are obtained.

The pressure at the time when the high-pressure gas is impregnated into the unfoamed resin molded product or resin composition in the gas impregnation step in the batch system or in the kneading and impregnation step in the continuous system can be suitably selected in consideration of kind of the gas, operability and the like, and it is, for example, 3 MPa or more (e.g., about 3 to about 100 MPa), and preferably 4 MPa or more (e.g., about 4 to about 100 MPa) in the case of using carbon dioxide as the gas. When the pressure of the gas is lower than 3 MPa, since the cell growth at the time of foaming is remarkable, the cell diameter becomes too large and, for example, inconveniences such as decreased reflectance tend to occur, so that the case is not preferable. This is because, since the impregnation amount of the gas under low pressure is relatively small as compared with that under high pressure and the cell mideant-forming rate is lowered to decrease the number of cell nuclei formed, the amount of the gas per cell is contrarily increased to extremely increase the cell diameter. Moreover, in a pressure region of lower than 3 MPa, the cell diameter and cell density are remarkably changed only by a slight change in the impregnation pressure, so that it is liable to become difficult to control the cell diameter and cell density.

The temperature at the time when the high-pressure gas is impregnated into the unfoamed resin molded product or resin composition in the gas impregnation step in the batch system or in the kneading and impregnation step in the continuous system varies depending on the kind of the high-pressure gas and the thermoplastic resin and the like, and can be selected from a wide range. However, in the case of considering operability and the like, it is, for example, about 10 to about 350°C. For example, in the case where an unfoamed molded product having a sheet shape is impregnated with the high-pressure gas, the impregnation temperature is about 10 to about 200°C, and preferably about 40 to about 200°C, in the batch system. Further, the temperature at the time when the high-pressure gas is injected into the resin composition and the composition is kneaded is generally about 60 to about 350°C, in the continuous system. Incidentally, when carbon dioxide is used as the high-pressure gas, the temperature at the time of impregnation (impregnation temperature) is preferably 32°C or more, and particularly preferably 40°C or more, in order to keep the supercritical state.

In the above-mentioned pressure reduction step, the pressure reduction rate is not particularly limited. However, in order to obtain homogeneous fine cells, it is preferably about 5 to about 300 MPa/s. Further, the heating temperature in the above-mentioned heating step is, for example, about 40 to about 250°C, and preferably about 60 to about 250°C.

Moreover, according to such a process for producing the polyolefin resin foam, a polyolefin resin foam having a high expansion ratio can be produced, so that the process has an advantage that a thick thermoplastic resin foam can be produced. For example, in the case where the polyolefin resin foam is produced in the continuous system, in order to keep the pressure inside the extruder in the kneading and impregnation step, it is necessary to narrow the gap of dies to be attached to the front end of the extruder as far as possible (usually 0.1 to 1.0 mm). Therefore, in order to obtain the thick polyolefin resin foam, the resin composition extruded through the narrow gap should be foamed in a high expansion ratio. However, since a high expansion ratio is not obtained hitherto, the thickness of the foam formed has been limited to thin one (for example, about 0.5 to about 2.0 mm).

To the contrary, in the case of the polyolefin resin foam produced by using the high-pressure gas, it is possible to obtain a foam having a final thickness of 0.50 to 5.00 mm continuously. Incidentally, in order to obtain such a thick polyolefin resin foam, it is desirable that a relative density (density after foaming/density in an unfoamed state) of the polyolefin resin foam is 0.02 to 0.3, preferably 0.025 to 0.28, and more preferably 0.03 to 0.25. When the above-mentioned relative density exceeds 0.3, foaming is insufficient and when it is less than 0.02, strength of the foam remarkably decreases in some cases, so that the cases are not preferable.

The above-mentioned density after foaming and density in an unfoamed state (apparent density) is determined according to the following equation after punching the unfoamed resin molded product or the foam to make a test piece and measuring volume and mass of the test piece.

$$\text{Density } (g/cm^3) = \text{Mass of test piece/Volume of test piece}$$

Moreover, the expansion ratio of the polyolefin resin foam is not particularly limited but is preferably 5 times or more (e.g., 5 to 50 times), more preferably 20 times or more (e.g., 20 to 40 times) from the viewpoint of obtaining excellent light reflection, impact-absorbing property and lightness in weight in the light-reflecting member using the polyolefin resin foam. When the expansion ratio is less than 5 times, a sufficient light reflectance and impact absorbance are hardly obtained in the light-reflecting member containing the polyolefin resin foam in some cases. Moreover, when the expansion ratio exceeds 50 times, strength of the foam remarkably decreases in some cases.

Incidentally, the expansion ratio of the polyolefin resin foam is calculated according to the following equation.

$$\text{Expansion ratio (times)} = \text{Density in an unfoamed state (density of unfoamed resin molded product) } (g/cm^3)/\text{Density of foam } (g/cm^3)$$

The thickness of the polyolefin resin foam at the time when it is used as a foamed layer in the light-reflecting member is not particularly limited and is suitably selected depending on the application, shape, form, and the like of the light-reflecting member using the polyolefin resin foam but is, for example, 0.5 to 5 mm and preferably 0.5 to 2 mm. Moreover, the shape of the polyolefin resin foam is not particularly limited and is suitably selected depending on the application, shape, form, and the like of the light-reflecting member using the polyolefin resin foam but is, for example, film shape, sheet shape, prism shape, heteromorphic shape, or the like.

In such a polyolefin resin foam, the cell structure is preferably an closed cell structure or a semi-interconnected and semi-closed cell structure (a cell structure where an closed cell structure and an interconnected cell structure are mixed and their ratio is not particularly limited) and a cell structure where the closed cell structure is 80% or more (particularly 90% or more) in the polyolefin resin foam is suitable.

Since the cell structure of the polyolefin resin foam is very fine (cell diameter: about 1 to about 50 $\mu$m) and uniform, the polyolefin resin foam has a large amount of fine cells per unit volume. Therefore, the polyolefin resin foam is excellent in light reflection.

The thickness, relative density, expansion ratio, cell structure, and the like of the polyolefin resin foam can be adjusted, for example, by suitably selecting and setting operation conditions such as temperature, pressure, and time in the gas impregnation step and kneading and impregnation step, operation conditions such as pressure reduction rate, temperature, and pressure in the pressure reduction step and molding and pressure reduction step, heating temperature in the heating step after pressure reduction or after molding and pressure reduction, and the like.

Since the polyolefin resin foam is produced by foam molding the resin composition containing the polyolefin resin as above, the foam is a highly foamed resin foam having a sufficient thickness and further having very large number of fine cells. Therefore, the polyolefin resin foam contained in the light-reflecting member as a light-reflecting layer is excellent in shape-fixing property, maintains a desired expansion ratio at foaming and does not shrink after foaming, maintains a high cushioning property, and is further excellent in flexibility, lightness in weight, and light reflection.

Light-Reflecting Member

The light-reflecting member of the invention, in all or part thereof, contains the polyolefin resin foam as a light-reflecting layer. Namely, in the light-reflecting member of the invention, a formed layer composed of the above-mentioned polyolefin resin foam excellent in cushioning property, flexibility, lightness in weight, and light reflection is used as the light-reflecting layer. In this connection, with regard to the light-reflecting member of the invention, its structure, thickness, shapes, and the like are not particularly limited as long as the member is a member prepared by using the above-mentioned polyolefin resin foam. The member includes generic terms of films and sheets.

The shape of the light-reflecting member is not particularly limited, and any shape can be selected. For example, it is a film, sheet, plate, prism, or the like shape. Moreover, it may be a shape including flexed shapes such as a screw shape, a bent shape, and a curved shape.

The structure of the light-reflecting member is not particularly limited and may be a single-layered structure or a laminated structure.

In the case where the structure of the light-reflecting member is a single-layered structure, the light-reflecting member is composed of only a foamed layer consisting of the above-mentioned polyolefin resin foam as the light-reflecting layer. Namely, the light-reflecting member may be a single layer composed of only a foamed layer consisting of the above-mentioned polyolefin resin foam.

The light-reflecting member having a single-layered structure can be obtained by using the above-mentioned polyolefin resin foam as the foamed layer as it is or by cutting the above-mentioned polyolefin resin foam into desired shape and thickness according to the necessity.

Moreover, in the case where the structure of the light-reflecting member is a laminated structure, the structure is not particularly limited as long as the light-reflecting member contains a foamed layer composed of the polyolefin resin foam as the light-reflecting layer. For example, it may be constituted by a laminated structure of the foamed layers composed of the above-mentioned polyolefin resin foam or may be constituted by a laminated structure of the foamed layer of the above-mentioned polyolefin resin foam and a non-foamed layer. In the light-reflecting member having a laminated structure, total number of the layers, the number of the foamed layers composed of the above-mentioned polyolefin resin foam, the number of the non-foamed layers, thickness of each layer, and the like are suitably selected depending on the application.

The non-foamed layer is not particularly limited as long as it is a layer having no foamed structure (cell structure) in the layer, For example, there may be mentioned a layer composed of a unfoamed resin molded product prepared by molding the above-mentioned resin composition into a suitable shape (e.g., sheet shape, film shape, etc.), a layer composed of a base material such as a plastic base material, a pressure-sensitive adhesive layer composed of various pressure-sensitive adhesives (e.g., acrylic pressure-sensitive adhesives, rubber-based pressure-sensitive adhesives, etc.), and the like. Incidentally, the non-foamed layer can be used alone or in combination of thereof.

As the light-reflecting member having the laminated structure, a laminate constituted by the foamed layer composed of the polyolefin resin foam and the non-foamed layer provided at least on one surface of the foamed layer is suitably used. Moreover, as the non-foamed layer in the laminate, a layer foamed of the unfoamed resin molded product obtained by molding the resin composition is preferable.

The light-reflecting member having the laminated structure can be produced by laminating the foamed layer composed of the polyolefin resin foam and the non-foamed layer. For example, in the case where the light-reflecting member is a laminate constituted by the foamed layer composed of the polyolefin resin foam and the non-foamed layer composed of the unfoamed resin molded product obtained by molding the resin composition, which is provided on one surface or both surfaces of the foamed layer composed of the polyolefin resin foam, the laminate can be produced by providing the non-foamed layer composed of the unfoamed resin molded product obtained by molding the resin composition on one surface or both surfaces of the foamed layer composed of the polyolefin resin foam.

The thickness of the light-reflecting member is not particularly limited and is suitably selected depending on the application, shape, form, and the like of the light-reflecting member but is, for example, 0.5 to 5 mm, and preferably 0.5 to 2 mm.

The density (apparent density) of the light-reflecting member is, for example, 0.02 to 0.3 g/cm$^3$, and preferably 0.03 to 0.2 g/cm$^3$. When the density is less than 0.02 g/cm$^3$, strength of the light-reflecting member remarkably decreases in some cases. On the other hand, when it exceeds 0.3 g/cm$^3$, foaming properties in the light-reflecting member become insufficient and the reflectance and impact-absorbing property decrease in some cases.

Incidentally, the density of the light-reflecting member is determined as follows. The light-reflecting member is punched to form a test piece and the volume and mass of the test piece are determined. Then, the density of the light-reflecting member is determined according to the following equation.

$$\text{Density (g/cm}^3\text{) of light-reflecting member} = \text{Mass of test piece/Volume of test piece}$$

The light reflectance at the light-reflecting member is 80% or more, preferably 85% or more as an average reflectance of light in the wavelength range of 300 to 700 nm. In this connection, the reflectance of light in the wavelength range of 300 to 700 nm at the light-reflecting member is a relative value at each wavelength in the case where diffusion reflectance of light at each wavelength in the wavelength region of 300 to 700 nm at a white solid obtained by solidifying a fine powder of barium sulfate is regarded as 100%.

The light-reflecting member of the invention is excellent in light reflection, impact-absorbing property, and lightness in weight. Moreover, the light-reflecting member of the invention can be suitably used in applications of light-reflecting member for backlight of liquid crystal displays and light-reflecting member for electric spectacular bulletin board.

Examples

The invention will be described below in more detail with reference to examples. However, the invention is not limited by these examples in any way.

Preparation Example of Resin Composition

The composition is prepared by mixing 80 parts by weight of polypropylene (melt flow rate (MFR) at 200°C : 0.20 g/10 min) and 20 parts by weight of magnesium hydroxide (average particle diameter; 0.7 μm),

Production Example of Unfoamed Resin Molded Product

The above-mentioned resin composition was kneaded by means of a kneader provided with roller-shaped blades (trade name "LABO PLASTOMILL": manufactured by Toyo Seiki Seisaku-sho, Ltd.) at a temperature of 180°C and then was molded into a sheet-shape having a thickness of 2.0 mm using a hot-plate press heated at 200°C to obtain an unfoamed resin molded product.

Production Example of Resin Foam

The above-mentioned resin composition was kneaded at a temperature of 200°C by a twin-screw extruder (manufactured by The Japan Steel Works, Ltd. (JSW)), and then, extruded into a strand shape. After water cooling, the extruded product was cut into a pellet shape and molded. When the melting point of the pellet-shape molded product (compound) was measured using a differential scanning calorimeter (manufactured by SII Nano Technology Inc.), it was 170°C.

The pellets were charged into a single-screw extruder manufacture by The Japan Steel Works, Ltd., and carbon dioxide was injected thereinto in an atmosphere of 220°C under a pressure of 22 MPa/cm$^3$ (after injection: 19 MPa/cm$^3$). After sufficient saturation with carbon dioxide, the pellets were cooled to a temperature suitable for foaming and then extruded through a die to obtain a resin foam (resin foamed structure product) (thickness: 3.0 mm).

Incidentally, the density of the pellet-shape molded product before foaming was 1.0 g/cm$^3$ and the density of the foam was 0.035 g/cm$^3$. Moreover, the expansion ratio (Expansion ratio (times) = Density of pellet-shape molded product before foaming/Density of resin foam) was 29 times.

Example 1

A light-reflecting member having a single-layered structure having a thickness of 1.0 mm was obtained by slicing the above-mentioned resin foam.

Example 2

A foamed structure product having a thickness of 0.9 mm was prepared by slicing the above-mentioned resin foam and a light-reflecting member having a laminated structure (thickness: 1.0 mm) was obtained by laminating the above-mentioned sliced unfoamed resin molded product (thickness: 0.1 mm) on one surface of the foamed structure product.

Comparative Example 1

A white PET film (trade name "MCPET" manufactured by Furukawa Electric Co., Ltd.) was used as a light-reflecting member.

Comparative Example 2

A white PET film (trade name "Lumirror 188-60L" manufactured by Toray Industries, Inc.) was used as a light-reflecting member.

Evaluation

Average reflectance, density, and impact-absorbing property were measured on the light-reflecting members according to Examples 1 and 2 and Comparative Examples 1 and 2 by the following method for measuring average reflectance, method for measuring density, and method for measuring impact-absorbing property. Also, the results are shown in Table 1.

Method for Measuring Average Reflectance

Reflectance of light in the wavelength range of 300 to 700 nm was measured using a spectrophotometer (trade name "U4100" manufactured by Hitachi High Technologies Corporation), 9 values of reflectance were read out at an interval of 50 nm from the chart obtained, and individual values of reflectance were averaged to determine average reflectance. Incidentally, the reflectance (diffusion reflectance) of light in the wavelength region of 300 to 700 nm at the light-reflecting members is a relative value at each wavelength in the case where diffusion reflectance of light at each wavelength in the wavelength region of 300 to 700 nm at a white solid obtained by solidifying a fine powder of barium sulfate is regarded as 100%.

Method for Measuring Density

A light-reflecting member was punched into a size of 100 mm x 100 mm to form a test piece. After the size of the test piece was measured by using a slide caliper, the mass thereof was measured on an electric balance and the density was determined according to the following equation:

$$\text{Density (g/cm}^3) = \text{Mass of test piece/Volume of test piece}$$

Method for Measuring Impact-absorbing Property

Impact force (F0) in the case where no light-reflecting member intervened and impact force (F1) in the case where the light-reflecting member intervened were measured by using an apparatus for measuring, through a pressure sensor, impact energy (20 mJ) imparted by an iron ball, and the impact-absorbing property was determined according to the following equation:

$$\text{Impact-absorbing property (\%)} = (F0 - F1)/F0 \times 100$$

Table 1

|  | Average reflectance (%) | Impact-absorbing property (%) | Density (g/cm$^3$) |
|---|---|---|---|
| Example 1 | 85 | 89 | 0.035 |
| Example 2 | 92 | 94 | 0.040 |
| Comparative Example 1 | 96 | 22 | 0.350 |
| Comparative Example 2 | 96 | 27 | 0.850 |

It was confirmed that the light-reflecting members of Examples are excellent in light reflection and impact-absorbing property. Moreover, from the values of the density, it was confirmed that the members are excellent in lightness in weight.

While the invention has been described in detail and with reference to specific embodiments thereof, it will be apparent to one skilled in the art that various changes and modifications can be made therein without departing from the spirit and scope thereof.

The present application is based on Japanese Patent Application No. 2007-116582 filed on April 26, 2007, and the contents are incorporated herein by reference.

Also, all the references are incorporated as a whole.

INDUSTRIAL APPLICABILITY

According to the light-reflecting member of the invention, since it has the above-mentioned constitution, the light-reflecting member is excellent in light reflection, impact-absorbing property, and lightness in weight. Moreover, the process for producing a light-reflecting member of the invention can provide a light-reflecting member excellent in light reflection, impact-absorbing property, and lightness in weight by using a polyolefin resin foam.

**Claims**

1. A light-reflecting member comprising a polyolefin resin foam as a light-reflecting layer, said polyolefin resin foam being obtained by foam molding a resin composition containing a polyolefin resin.

2. The light-reflecting member according to claim 1, wherein the resin composition further contains powder particles.

3. The light-reflecting member according to claim 2, wherein the resin composition contains the powder particles in an amount of 5 to 150 parts by weight based on 100 parts by weight of the polyolefin resin.

4. The light-reflecting member according to claim 2 or 3, wherein the powder particles have an average particle diameter of 0.1 to 10 $\mu$m.

5. The light-reflecting member according to any of claims 1 to 4, wherein the polyolefin resin foam has an expansion ratio of 5 times or more.

6. The light-reflecting member according to any of claims 1 to 5, which has 80% or more of an average reflectance of light in the wavelength region of 300 to 700 nm.

7. The light-reilecting member according to any of claims 1 to 6, which has a density of 0.02 to 0.3 g/cm$^3$.

8. The light-reflecting member according to any of claims 1 to 7, which is a single layer composed of only a foamed layer comprising the polyolefin resin foam or a laminate composed of the foamed layer and a non-foamed layer provided on at least one surface of the foamed layer.

9. A process for producing a light-reflecting member, said process comprising forming a polyolefin resin foam as a light-reflecting layer by foam molding a resin composition containing a polyolefin resin.

10. The process for producing a light-reflecting member according to claim 9, wherein the resin composition containing a polyolefin resin is foamed using a high-pressure gas.

11. The process for producing a light-reflecting member according to claim 10, wherein the high-pressure gas is carbon dioxide or nitrogen.

12. The process for producing a light-reflecting member according to claim 10 or 11, wherein a fluid in a supercritical state is used as the high-pressure gas.

## INTERNATIONAL SEARCH REPORT

| | International application No. |
|---|---|
| | PCT/JP2008/057209 |

A. CLASSIFICATION OF SUBJECT MATTER
*G02B5/08*(2006.01)i, *B32B5/18*(2006.01)i, *C08J9/12*(2006.01)i, *C08K3/00*
(2006.01)i, *C08L23/00*(2006.01)i, *F21V7/00*(2006.01)i, *F21V7/22*(2006.01)i

According to International Patent Classification (IPC) or to both national classification and IPC

B. FIELDS SEARCHED

Minimum documentation searched (classification system followed by classification symbols)
G02B5/08, B32B5/18, C08J9/12, C08K3/00, C08L23/00, F21V7/00, F21V7/22

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | US 2007/0045888 A1 (Lee Mao-Song),<br>01 March, 2007 (01.03.07),<br>Full text<br>& JP 2007-114747 A & TW 272434 B | 1,9-12<br>2-8 |
| Y | JP 2006-072347 A (Toray Industries, Inc.),<br>16 March, 2006 (16.03.06),<br>Par. Nos. [0050], [0053], [0059], [0064]<br>(Family: none) | 2-8 |
| Y | WO 2006/011521 A1 (Dueller Corp.),<br>02 February, 2006 (02.02.06),<br>Par. Nos. [0030], [0033], [0034]<br>& JP 2006-45259 A & KR 10-2007-0039106 A<br>& CN 1993410 A | 6,8 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 July, 2008 (01.07.08) | Date of mailing of the international search report<br>15 July, 2008 (15.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

| International application No. |
|---|
| PCT/JP2008/057209 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The inventions of claims 1, 9-12 are not novel since they are disclosed in document 1: US 2007/0045888 A1 (Lee Mao-Song). Consequently, there is no technical relationship among these inventions involving one or more of the same or corresponding special technical features, and thus these inventions are not considered so linked as to form a single general inventive concept.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

Form PCT/ISA/210 (continuation of first sheet (2)) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005068203 A
- JP 2007116582 A